# EUROPÄISCHE PATENTANMELDUNG

(11) **EP 0 854 560 A1**
(43) Veröffentlichungstag der Anmeldung: **22.07.1998**
(21) Anmeldenummer: 98100161.3
(22) Anmeldetag: 07.01.1998
(51) Int. Cl.: H02K 11/04, H02K 9/04

(54) **Entwärmungskonzept für ein elektrisches Antriebssystem**

(30) Priorität: 15.01.1997 DE 29700643 U
(71) Anmelder: SIEMENS AKTIENGESELLSCHAFT, 80333 München (DE)
(72) Erfinder: Knauer, Hans, 91359 Leutenbach (DE); Schwesig, Günter, Dipl.-Ing. (FH), 91054 Erlangen (DE)

(57) **Zusammenfassung**

Mit Hilfe der vorliegenden Erfindung wird eine Fremdbelüftung zur Entwärmung mit minimaler Lüfterleistung und minimalem Bauvolumen geschaffen. Dies wird erreicht, indem ein Lüftermotor (LM) in die Antriebselektronik (AE) integriert wird, welcher ein externes Lüfterrad (LRₑₓₜ) antreibt. Zusätzlich kann der Lüftermotor (LM) ein internes Lüfterrad (LRᵢₙₜ) zur Luftverwirbelung im Gehäuse des elektrischen Antriebsystemes beinhalten. Auf diese Weise wird durch das Wärmetauscherprinzip die Verlustleistungsabfuhr wesentlich verbessert. Ein weiterer Vorteil besteht darin, daß auf einen Lüfterversorgungsspannungsanschluß verzichtet werden kann.

## Beschreibung

Die Erfindung bezieht sich auf ein elektrisches Antriebssystem mit Motor, interiertem Umrichter und integrierter Antriebselektronik sowie mit Mitteln zur Fremdbelüftung.

Für dezentrale Antriebskonzepte wird die Antriebselektronik (Antriebsregelung und die Leistungselektronik) zunehmend in den Motor integriert. Hierzu werden vorzugsweise Gleichstrom-, Synchron-, Asynchronmaschinen und Schrittmotoren eingesetzt. Die Leistungselektronik und die dadurch bedingt entstehende Verlustleistung ist abhängig von der Motorleistung, dem verwendeten Maschinentyp, dem Gleich- bzw. Umrichtertyp, dem Leistungsschaltertyp (Thyristor, Transistor etc.) der Tatsache, ob der Motor im 1, 2 oder 4 Quadrantenbetrieb betrieben wird, oder ob eine aktive oder passive Energierückspeisung erfolgt. Desweiteren hängt die entstehende Verlustleistung auch von der Ausführung der Antriebsregelung ab.

Zur Abführung der Verlustleistung sind folgende Entwärmungskonzepte bekannt.

### Freie Konvektion:

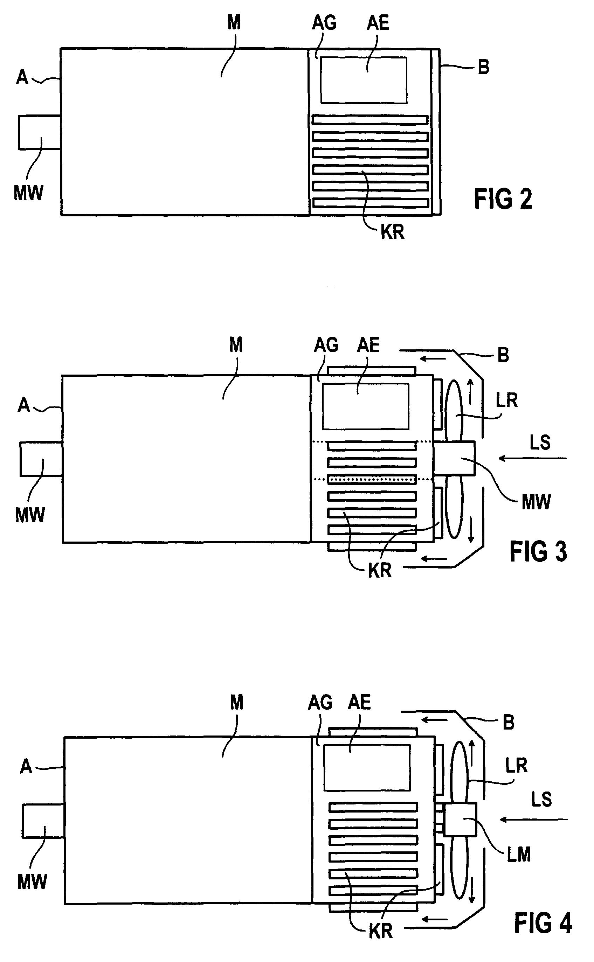

Dieses einfachste Entwärmungskonzept wird bei Antrieben mit kleiner Verlustleistung eingesetzt. Eine mögliche Ausführungsform ist anhand der Darstellung nach FIG 2 gezeigt, wonach an einem Motor M ein Anbaugehäuse AG angebracht ist, welches unter anderem die Antriebselektronik AE beinhaltet. Zur Entlüftung weist das Anbaugehäuse AG Kühlrippen KR auf, welche die Oberfläche des Anbaugehäuses vergrößern und somit eine größere Wärmeabfuhr ermöglichen.

### Eigenbelüftung:

Bei Antrieben mit größerer Verlustleistung und einem geeigneten Drehzahl/Drehmoment-Profil, wird die Motorwelle MW durch das Antriebsgehäuse AG mit der Antriebselektronik AE geführt und auf der Antriebswelle MW ein Lüfterrad LR angebracht. Dieses Lüfterrad LR wird durch den Motor mitangetrieben und erzeugt einen Luftstrom, welcher eine verbesserte Kühlung des Anbaugehäuses bewirkt. Dabei ist die Luftstrommenge eine Funktion der Motordrehzahl, was vor allem bei Motoren mit niedrigen Drehzahlen Probleme mitsichbringt. Hinzu kommt der Nachteil, daß dann, wenn der Motor stillsteht oder ausfällt, kein Luftstrom erzeugt wird. Dieses ebenfalls bekannte Konzept der Eigenbelüftung ist in der Darstellung gemäß FIG 3 gezeigt.

### Fremdbelüftung:

Bei Antrieben mit größerer Verlustleistung und einem Drehzahl/Drehmoment-Profil, für das eine Eigenbelüftung nicht ausreicht, wird eine Fremdbelüftung vorgenommen. Dieses bekannte Verfahren ist in der Darstellung gemäß FIG 4 gezeigt und unterscheidet sich von der Eigenbelüftung dadurch, daß das Lüfterrad LR nicht durch die Motorwelle MW, sondern durch einen separaten Lüftermotor LM angetrieben wird. Dies hat zur Folge, daß die Luftstrommenge keine Funktion der Motordrehzahl mehr ist, wodurch die der Eigenbelüftung zugrundeliegende Nachteile vermieden werden können.

Bei bisher bekannten Produkten mit Fremdbelüftung wird die Verlustleistung über extern angebaute Lüfter abgeführt. Die bekannten Antriebssysteme weisen jedoch den Nachteil auf, daß durch den extern angebauten Lüfter ein hohes Bauvolumen entsteht, ein zusätzlicher Lüfterversorgungsspannungsanschluß notwendig wird und eine hohe Lüfterleistung erforderlich ist.

Aufgabe der vorliegenden Erfindung ist es daher, ein elektrisches Antriebssystem mit Fremdbelüftung zu schaffen, welches mit minimaler Lüfterleistung auskommt und zudem ein minimales Bauvolumen ermöglicht.

Gemäß der vorliegenden Erfindung wird diese Aufgabe durch ein elektrisches Antriebssystem mit Motor, integriertem Umrichter und integrierter Antriebselektronik sowie mit Mitteln zur Fremdbelüftung gelöst, indem zur Fremdbelüftung mindestens ein separater Lüftermotor LM in das Gehäuse des Antriebssystems integriert ist, dessen Lüftermotorwelle LMW ein außerhalb des Gehäuses des Antriebssystems angeordnetes jeweiliges externes Lüfterrad LRₑₓₜ antreibt.

Es sei an dieser Stelle bereits erwähnt, daß man bei einem elektrischen Antriebssystem von einer A-Seite und einer B-Seite spricht, wobei die A-Seite regelmäßig die Seite des Antriebssystems beschreibt, an welcher die Motorwelle für Antriebszwecke herausgeführt ist, während die B-Seite die entgegengesetzte Seite beschreibt. Bei Motoren, bei welchen die Motorwelle nicht beidseitig durch das Anbaugehäuse geführt werden muß, bietet die B-Seite somit konstruktionsbedingt Vorteile zum Anbau von Antriebselektronik, Umrichter etc.

In einer ersten vorteilhaften Ausgestaltung der Erfindung wird der Grad der erzielbaren Entwärmung noch erhöht und damit die erforderliche Lüfterleistung zusätzlich verringert. Dies wird dadurch erreicht, daß auf der B-Seite B2 jedes Lüftermotors (LM) ein weiteres internes Lüfterrad LRᵢₙₜ vorgesehen ist, durch welches eine Luftverwirbelung im Gehäuse des Antriebssystems erzeugbar ist.

Dadurch kann die Verlustleistungsabfuhr wesentlich verbessert werden.

In einer weiteren vorteilhaften Ausgestaltung ist die Antriebselektronik über ein Anbaugehäuse in das Antriebssystem integriert und jeder Lüftermotor in dem genannten Anbaugehäuse so integriert, daß der Lüftermotor über die Antriebselektronik mit Energie versorgbar ist. Dies bringt den wesentlichen Vorteil mit sich, daß kein separater Lüfterversorgungsspannungsanschluß erforderlich ist.

Eine weitere vorteilhafte Ausgestaltung des elektrischen Antriebssystems gemäß der vorliegenden Erfindung ist dadurch gekennzeichnet, daß das Anbaugehäuse AG an das B-seitige Motorlagerschild angebaut ist und jeder Lüftermotor LM einerseits das zugehörige externe Lüfterrad LRₑₓₜ andererseits auf der B-Seite B des Anbaugehäuses AG angeordnet ist.

Eine weitere vorteilhafte Ausgestaltung des elektrischen Antriebssystems gemäß der vorliegenden Erfindung beschreibt vorteilhafte Möglichkeiten zur Durchführung der Lüftermotorwelle durch das Gehäuse des Antriebssystems. Diese vorteilhafte Ausgestaltung ist dadurch gekennzeichnet, daß jede Lüftermotorwelle LMW über eine wellendichtung nach außen zum zugehörigen externen Lüfterrad LRₑₓₜ geführt ist oder über eine Kupplung eine zweite Welle antreibt, auf welchen das zugehörige externe Lüfterrad LRₑₓₜ angeordnet ist.

In einer weiteren vorteilhaften Ausgestaltung des elektrischen Antriebssystems gemäß der vorliegenden Erfindung wird eine besonders einfache und damit kostengünstige Ausführung der Erfindung ermöglicht. Dies wird dadurch erreicht, daß ein einziger Lüftermotor LM vorgesehen ist, welcher mittig auf der B-Seite B des Motors M angeordnet ist.

In einer weiteren vorteilhaften Ausgestaltung des elektrischen Antriebssystems gemäß der vorliegenden Erfindung wird erreicht, daß das Entwärmungskonzept gemäß der vorliegenden Erfindung auch dann eingesetzt werden kann, wenn die Motorwelle des Motors B-seitig durch das Anbaugehäuse herausgeführt werden muß. Dies wird dadurch erreicht, daß ein einziger Lüftermotor LM vorgesehen ist, welcher als Hohlwellenmotor ausgeführt ist, und das zugehörige externe Lüfterrad LRₑₓₜ als Hohlwellenlüfterrad ausgeführt ist, welches mittels einer Riemen- oder Zahnradkopplung antreibbar ist.

In einer alternativen Ausgestaltung des elektrischen Antriebssystems gemäß der vorliegenden Erfindung wird eine weitere Möglichkeit geschaffen, das Entwärmungskonzept auch bei Motoren mit beidseitig durch das Anbaugehäuse herausgeführter Motorwelle einzusetzen. Dies wird dadurch erreicht, daß ein einziger Lüftermotor LM vorgesehen ist, welcher außermittig auf der B-Seite B des Motors M angeordnet ist, und das zugehörige externe Lüfterrad LRₑₓₜ als Hohlwellenlüfterrad ausgeführt ist, welches mittels einer Riemen- oder Zahnradkopplung antreibbar ist.

Weitere vorteilhafte Ausgestaltungen des Antriebssystems gemäß der vorliegenden Erfindung ermöglichen eine besonders effiziente Führung des Luftstroms durch den oder die externen Lüfter zur Entwärmung des elektrischen Antriebssystems. Ein erstes solches vorteilhaftes Ausführungsbeispiel ist dadurch gekennzeichnet, daß das Gehäuse des Antriebssystems auf der B-Seite B radiale Kühlrippen KR_{radial} aufweist, wobei durch das oder die externen Lüfterräder LRₑₓₜ Luft B-seitig B axial ansaugbar und radial so umlenkbar ist, daß ein radialer Luftstrom über die radialen Kühlrippen KR_{radial} führbar ist.

Ein weiteres solches vorteilhaftes Ausführungsbeispiel ist dadurch gekennzeichnet, daß das Gehäuse des Antriebssystems über den Umfang verteilte axiale Kühlrippen oder Kühlkanäle KKₐₓᵢₐₗ aufweist und eine Haube H an der B-Seite B des Gehäuses des Antriebssystems so angeordnet ist, daß der radiale Luftstrom axial über die axialen Kühlrippen oder in die axialen Kühlkanäle KKₐₓᵢₐₗ des Gehäuses führbar ist.

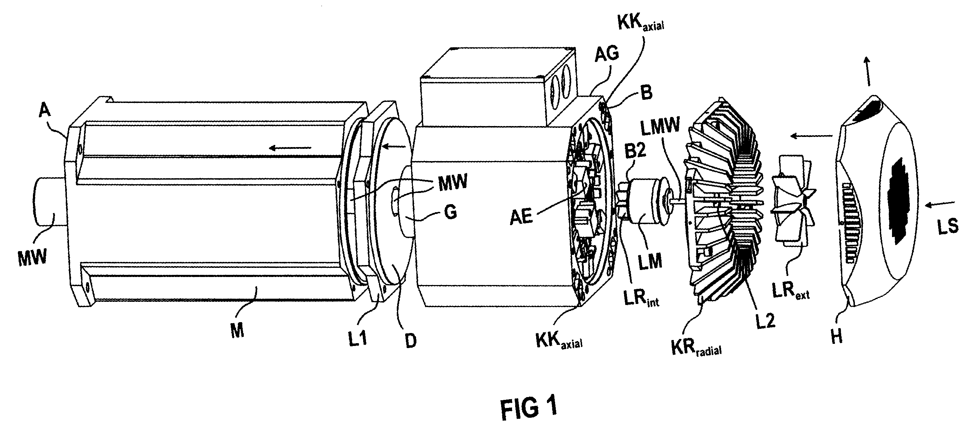

Weitere Vorteile und Einzelheiten gemäß der vorliegenden Erfindung ergeben sich aus der folgenden Beschreibung eines vorteilhaften Ausführungsbeispieles und in Verbindung mit der Darstellung nach FIG 1. Soweit in den Figuren Elemente mit gleicher Funktionalität vorkommen, sind diese der besseren Übersichtlichkeit halber mit gleichen Bezugszeichen gekennzeichnet. Es zeigen:
- FIG 1: eine Explosionszeichnung eines elektrischen Antriebssystems mit Mitteln zur Fremdbelüftung gemäß der vorliegenden Erfindung,
- FIG 2: eine Prinzipskizze eines elektrischen Antriebssystems mit Entwärmung durch freie Konvektion,
- FIG 3: eine Prinzipskizze eines elektrischen Antriebssystems mit Entwärmung durch Eigenbelüftung und
- FIG 4: ein elektrisches Antriebssystem mit herkömmlichen Entwärmungsmitteln durch Fremdbelüftung.

Die in den Darstellungen nach den Figuren 2 bis 4 gezeigten Entwärmungskonzepte zeigen den Stand der Technik und wurden bereits eingangs in der Beschreibungseinleitung erläutert.

In der Darstellung gemäß FIG 1 ist eine Explosionszeichnung eines elektrischen Antriebssystems mit Motor M, integriertem Umrichter und integrierter Antriebselektronik AE gezeigt, welches eine Fremdbelüftung gemäß der vorliegenden Erfindung ermöglicht. Dazu ist ein elektrischer Motor M gezeigt, dessen Motorwelle MW A-seitig A aus dem Motorgehäuse geführt ist. B-seitig B ist ein Anbaugehäuse AG für die Integration der Antriebselektronik AE vorgesehen, welches auf dem B-seitigen Motorlagerschild angebracht ist. Dieses Anbaugehäuse AG ist so gestaltet, daß die Störkontur (Einbauformat) des Motors M möglichst wenig verletzt wird.

Bevorzugterweise weist das Anbaugehäuse AG konzeptbedingt eine kleine Baulänge auf, wodurch sich das Bauvolumen des elektrischen Antriebssystems minimieren läßt. In dem Anbaugehäuse AG mit der darin integrierten Antriebselektronik AE ist ein separater Lüftermotor LM zum Zwecke der Fremdbelüftung integriert. Dieser Lüftermotor LM ist ebenfalls B-seitig B im Anbaugehäuse AG angeordnet, so daß die Lüftermotorwelle LMW auf der B-Seite B des elektrischen Antriebssystemes, also von der A-Seite A abgewandt angeordnet ist.

Die Lüftermotorwelle LMW des Lüftermotors LM ist durch ein B-seitig angeordnetes Lagerschild L des Anbaugehäuses AG nach außen geführt und treibt ein externes Lüfterrad LRₑₓₜ an. Die Lüftermotorwelle LMW kann dabei entweder über eine Wellendichtung mit entsprechender Schutzart nach außen geführt sein oder aber über eine Kupplung eine zweite Welle antreiben, die über das Lagerschild L mit entsprechender Schutzart nach außen geführt wird und das interne Lüfterrad LRₑₓₜ antreibt. Auf diese Weise können auch mehrere Lüftermotoren mit jeweils zugeordnetem externen Lüfterrad vorgesehen sein. Der Einfachheit halber ist jedoch im Ausführungsbeispiel eine Anordnung mit lediglich einem Lüftermotor LM gezeigt, welcher ein einzelnes externes Lüfterrad LRₑₓₜ antreibt.

Vorteilhafterweise sind die Leistungsschalter der Antriebselektronik AE im Anbaugehäuse AG ebenfalls B-seitig montiert. Das Lagerschild L des Anbaugehäuses AG weist radiale Kühlrippen KR_{radial} auf. Das Anbaugehäuse AG besitzt axiale Kühlkanäle KKₐₓᵢₐₗ. Alternativ dazu könnten beispielsweise auch axiale Kühlrippen über den Umfang des Anbaugehäuses verteilt angeordnet sein. Ebenso ist eine solche Maßnahme ergänzend möglich.

An das Lagerschild L2 des Anbaugehäuses AG ist B-seitig eine Haube H angebracht, welche axiale Lufteintrittsschlitze und radiale Luftaustrittsschlitze aufweist. Diese Haube H sichert zum einen das externe Lüfterrad LRₑₓₜ, zum anderen dient sie zur geeigneten Führung eines Luftstroms LS.

Das externe Lüfterrad LRₑₓₜ saugt nun Luft B-seitig an und lenkt diese Luft radial um. Radial umgelenkte Luft wird so über die radial angeordneten Kühlrippen KR_{radial} am Lagerschild L2 führt. Da die Leistungsschalter der Antriebselektronik AE ebenfalls B-seitig montiert sind, geben diese Leistungsschalter ihre Verlustwärme bevorzugt an das Lagerschild L ab. Diese Verlustwärme kann so durch den axial umgelenkten Luftstrom LS über die radialen Kühlrippen KR_{radial} abgeführt werden. Somit sind die radialen Kühlrippen hauptsächlich für die Abfuhr der Verlustleistung des Leistungsteils (Schalt- und Durchlaßverluste der Leistungsschalter) vorgesehen.

Die Haube an der Gehäuse B-Seite optimiert die Führung des Luftstroms LS dahingehend, daß ein Teil des radial umgelenkten Luftstroms durch die radialen Luftaustrittsschlitze der Haube H austritt und der andere Teil des Luftstroms LS durch die Haube H axial über das Anbaugehäuse AG weitergeleitet wird. Dieser axial weitergeleitete Luftstrom wird somit durch die axialen Kühlkanäle KKₐₓᵢₐₗ bzw., falls vorhanden, über axiale Kühlrippen geführt. Diese axialen Kühlkanäle KKₐₓᵢₐₗ bzw. axialen Kühlrippen dienen hauptsächlich für die Abfuhr der Elektronikverlustleistung. Der genannte axiale Luftstrom kann so auch über die Oberfläche des Motors M weitergeleitet werden, wobei der Motor M ebenfalls Kühlrippen bzw. Kühlkanäle aufweisen kann. Dadurch kann auch die im Motor M selbst entstehende Wärme größtenteils abgeführt werden.

Zusätzlich weist der Lüftermotor LM auf dessen B-Seite B2 ein weiteres internes Lüfterrad LRᵢₙₜ auf, durch welches eine Luftverwirbelung innerhalb des Anbaugehäuses AG erreicht werden kann. Durch diese Luftverwirbelung kann aufgrund des Wärmetauscherprinzips die Verlustleistungsabfuhr wesentlich verbessert werden. Dies bringt den Vorteil mit sich, daß durch das Entwärmungskonzept gemäß der vorliegenden Erfindung eine sehr kleine Lüfterleistung ermöglicht wird.

Unabhängig vom in der Darstellung gemäß FIG 1 gezeigten Ausführungsbeispiel ist auch vorstellbar, daß das Entwärmungskonzept gemäß der vorliegenden Erfindung auch dann eingesetzt werden kann, wenn die Motorwelle MW B-seitig B durch das Anbaugehäuse AG herausgeführt werden muß. In einem solchen Fall kann der Lüftermotor LM als Hohlwellenmotor ausgeführt werden und dann über Riemen oder Zahnräder ein externes Hohlwellenlüfterrad betreiben. Desweiteren vorstellbar ist auch, daß ein Lüftermotor LM, wie er im Ausführungsbeispiel gemäß der Darstellung nach FIG 1 gezeigt ist, außermittig angeordnet wird und ebenfalls über eine Riemen- oder Zahnradkopplung ein Hohlwellenlüfterrad antreibt. Ebenfalls ist vorstellbar, daß mehrere außermittig angeordnete Lüftermotoren mit entsprechenden externen und internen Lüfterrädern eingesetzt werden.

Zwischen dem B-seitigen Lagerschild L1 des Motors M und der Antriebselektronik AE im Anbaugehäuse AG ist im Ausführungsbeispiel gemäß der Darstellung nach FIG 1 desweiteren eine Dämmscheibe D aus einem wärmeisolierenden Material (z.B. glasfaserverstärker Kunststoff) vorgesehen, um die Verlustleistung (Wärme) des Motors M von der Verlustleistung der Antriebs-elektronik AE zu entkoppeln. Vorstellbar ist jedoch, daß bereits das B-seitige Lagerschild L1 des Motors M zur Wärmeentkopplung aus einem wärmeisolierenden Material ausgeführt ist. Wie in der Darstellung gemäß FIG 1 vorgesehen, kann auch ein Gebersystem G zur Rotorlage- und Drehzahlerfassung vorgesehen sein. Dies ist abhängig vom verwendeten Motortyp. Vorteilhafterweise wird ein solches Gebersystem G nach der Wärmeentkopplung auf Seiten des Anbaugehäuses AG angeordnet.

## Patentansprüche

1. Elektrisches Antriebssystem mit Motor (M), integriertem Umrichter und integrierter Antriebselektronik (AE) sowie mit Mitteln zur Fremdbelüftung **dadurch gekennzeichnet**, daß zur Fremdbelüftung mindestens ein separater Lüftermotor (LM) in das Gehäuse des Antriebssystems integriert ist, dessen Lüftermotorwelle (LMW) ein außerhalb des Gehäuses des Antriebssystems angeordnetes jeweiliges externes Lüfterrad (LRₑₓₜ) antreibt.

2. Elektrisches Antriebssystem nach Anspruch 1, **dadurch gekennzeichnet**, daß auf der B-Seite (B2) jedes Lüftermotors (LM) ein weiteres internes Lüfterrad (LRᵢₙₜ) vorgesehen ist, durch welches eine Luftverwirbelung im Gehäuse des Antriebssystems erzeugbar ist.

3. Elektrisches Antriebssystem nach Anspruch 1 oder 2, **dadurch gekennzeichnet**, daß die Antriebselektronik (AE) über ein Anbaugehäuse (AG) in das Antriebssystem integriert ist und jeder Lüftermotor (LM) in dem genannten Anbaugehäuse (AG) so integriert ist, daß der Lüftermotor (LM) über die Antriebselektronik (AE) mit Energie versorgbar ist.

4. Elektrisches Antriebssystem nach Anspruch 3, **dadurch gekennzeichnet**, daß das Anbaugehäuse (AG) an das B-seitige Motorlagerschild (L1) angebaut ist und jeder Lüftermotor (LM) einerseits und das zugehörige externe Lüfterrad (LRₑₓₜ) andererseits auf der B-Seite (B, L2) des Anbaugehäuses (AG) angeordnet sind.

5. Elektrisches Antriebssystem nach einem der vorangehenden Ansprüche, **dadurch gekennzeichnet**, daß jede Lüftermotorwelle (LMW) über eine Wellendichtung nach außen zum zugehörigen externen Lüfterrad (LRₑₓₜ) geführt ist oder über eine Kupplung eine zweite Welle antreibt, auf welche das zugehörige externe Lüfterrad (LRₑₓₜ) angeordnet ist.

6. Elektrisches Antriebssystem nach einem der vorangehenden Ansprüche, **dadurch gekennzeichnet**, daß ein einziger Lüftermotor (LM) vorgesehen ist, welcher mittig auf der B-Seite (B) des Motors (M) angeordnet ist.

7. Elektrisches Antriebssystem nach einem der vorangehenden Ansprüche 1 bis 5, **dadurch gekennzeichnet**, daß ein einziger Lüftermotor (LM) vorgesehen ist, welcher als Hohlwellenmotor ausgeführt ist, und das zugehörige externe Lüfterrad (LRₑₓₜ) als Hohlwellenlüfterrad ausgeführt ist, welches mittels einer Riemen- oder Zahnradkopplung antreibbar ist.

8. Elektrisches Antriebssystem nach einem der vorangehenden Ansprüche 1 bis 5, **dadurch gekennzeichnet**, daß ein einziger Lüftermotor (LM) vorgesehen ist, welcher außermittig auf der B-Seite (B) des Motors (M) angeordnet ist, und das zugehörige externe Lüfterrad (LRₑₓₜ) als Hohlwellenlüfterrad ausgeführt ist, welches mittels einer Riemen- oder Zahnradkopplung antreibbar ist.

9. Elektrisches Antriebssystem nach einem der vorangehenden Ansprüche, **dadurch gekennzeichnet**, daß das Gehäuse des Antriebssystems auf der B-Seite (B) radiale Kühlrippen (KR_{radial}) aufweist, wobei durch das oder die externen Lüfterräder (LRₑₓₜ) Luft B-seitig (B, L2) axial ansaugbar und radial so umlenkbar ist, daß ein radialer Luftstrom über die radialen Kühlrippen (KR_{radial}) führbar ist.

10. Elektrisches Antriebssystem nach Anspruch 9, **dadurch gekennzeichnet**, daß das Gehäuse des Antriebssystems über den Umfang verteilte axiale Kühlrippen oder Kühlkanäle (KKₐₓᵢₐₗ) aufweist und eine Haube (H) an der B-Seite (B) des Gehäuses des Antriebssystems so angeordnet ist, daß der radiale Luftstrom axial über die axialen Kühlrippen oder in die axialen Kühlkanäle (KKₐₓᵢₐₗ) des Gehäuses führbar ist.
